# EUROPEAN PATENT APPLICATION

(11) **EP 4 715 851 A1**
(43) Date of publication of application: **25.03.2026**
(21) Application number: 24806883.5
(22) Date of filing: 04.04.2024
(51) Int. Cl.: H01G 9/07, H01G 4/10, H01G 4/33, H01G 9/00, H01G 9/15, H01G 9/045, H01G 9/052, H01G 9/145

(54) **CAPACITOR, ELECTRICAL CIRCUIT, CIRCUIT BOARD, APPARATUS, MEMBER FOR CAPACITORS, AND METHOD FOR MANUFACTURING CAPACITOR**

(30) Priority: 15.05.2023 JP 2023079992
(71) Applicant: Panasonic Intellectual Property Management Co., Ltd., Kadoma-shi, Osaka 571-0057 (JP)
(72) Inventor: TAKEUCHI, Hiroki, Kadoma-shi, Osaka 571-0057 (JP)
(74) Representative: Grünecker Patent- und Rechtsanwälte PartG mbB
(86) International application number: PCT/JP2024/013888
(87) International publication number: WO 2024/236929

(57) **Abstract**

A capacitor includes: a porous body including a plurality of pores; and a conductor. The porous body includes: a substrate having electrical conductivity; a first dielectric layer disposed on the substrate; and a second dielectric layer disposed on the substrate. The conductor is disposed on the first dielectric layer and the second dielectric layer. The first dielectric layer is disposed in a first portion of the porous body that includes a boundary between the porous body and the outside of the porous body. The second dielectric layer is disposed in a second portion of the porous body that is located further inside the porous body than the first portion.

## Description

### Technical Field

The present disclosure relates to a capacitor, an electric circuit, a circuit board, a device, a capacitor component, and a method for manufacturing the capacitor.

### Background Art

In the related art, capacitors including dielectric layers formed by a vapor phase method, such as atomic deposition, have been known.

For example, PTL 1 describes an electrolytic capacitor including a dielectric film formed on a surface of the anode foil that faces the separator. This dielectric layer is formed by atomic layer deposition.

PTL 2 describes an electrolytic capacitor including a predetermined electrode and at least one of an electrolyte or a solid electrolyte impregnated into the porous portion of the electrode. The porous portion of the electrode includes a porous body, a first dielectric layer covering at least part of the porous body, and a second dielectric layer covering at least part of the first dielectric layer. The porous body is formed of a first metal so as to be integral with the core portion. The second dielectric layer is formed by atomic layer deposition.

### Citation List

### Patent Literature

PTL 1: Japanese Unexamined Patent Application Publication No. 2012-43960
PTL 2: International Publication No. WO 2018/180029

### Summary of Invention

### Technical Problem

The present disclosure provides a capacitor that offers advantages in terms of voltage resistance and high capacitance.

### Solution to Problem

A capacitor of the present disclosure includes:
a porous body including a plurality of pores; and
a conductor.

The porous body includes:
a substrate having electrical conductivity;
a first dielectric layer disposed on the substrate; and
a second dielectric layer disposed on the substrate.

The conductor is disposed on the first dielectric layer and the second dielectric layer,
the first dielectric layer is disposed in a first portion of the porous body, the first portion including a boundary between the porous body and the outside of the porous body, and
the second dielectric layer is disposed in a second portion of the porous body, the second portion being located further inside the porous body than the first portion. Advantageous Effects of Invention

The present disclosure provides a capacitor that offers advantages in terms of voltage resistance and high capacitance.

### Brief Description of Drawings

[Fig. 1] Fig. 1 is a cross-sectional view of an example of a capacitor of the present disclosure.
[Fig. 2] Fig. 2 is a cross-sectional view of the area enclosed by rectangle II in Fig. 1.
[Fig. 3] Fig. 3 is a flowchart illustrating an example of the method for manufacturing the capacitor of the present disclosure.
[Fig. 4] Fig. 4 is a cross-sectional view of another example of the capacitor of the present disclosure.
[Fig. 5] Fig. 5 is a cross-sectional view of yet another example of the capacitor of the present disclosure.
[Fig. 6] Fig. 6 is a cross-sectional view of yet another example of the capacitor of the present disclosure.
[Fig. 7] Fig. 7 is a cross-sectional view of the area enclosed by rectangle VII in Fig. 6.
[Fig. 8A] Fig. 8A is a schematic view of an example of an electric circuit of the present disclosure.
[Fig. 8B] Fig. 8B is a schematic view of an example of a circuit board of the present disclosure.
[Fig. 8C] Fig. 8C is a schematic view of an example of a device of the present disclosure.

### Description of Embodiments

### (Underlying Knowledge Forming Basis of the Present Disclosure)

A capacitor may be produced by forming a dielectric layer on a substrate having porosity and electrical conductivity. The investigations conducted by the inventor of the present disclosure have revealed that, when a dielectric layer is formed by using a vapor phase method, such as atomic deposition, as in the method for manufacturing an electrolytic capacitor described in PTL 1, it is difficult to form the dielectric layer on the substrate in an inner portion of the porous body in the substrate. Since a conductor may also be disposed in the inner portion of such a porous body during capacitor manufacturing, it may be difficult to ensure the voltage resistance of a capacitor only by forming the dielectric layer using a vapor phase method.

As described above, the electrolytic capacitor described in PTL 2 includes a first dielectric layer covering at least part of the porous body and a second dielectric layer covering at least part of the first dielectric layer. The capacitance of a capacitor is inversely proportional to the thickness of the dielectric layer. It is thus difficult to say that the formation of the second dielectric layer covering the first dielectric layer, as in the electrolytic capacitor described in PTL 2, is advantageous in increasing the capacitance of the capacitor. In addition, the voltage resistance may be reduced due to the formation of defect levels at the interface between the first dielectric layer and the second dielectric layer, and the dielectric layers may peel off due to the internal stress caused by the difference in thermal expansion between the first dielectric layer and the second dielectric layer.

Under such circumstances, the inventor of the present disclosure has diligently studied the structure of a capacitor that offers advantages in terms of voltage resistance and high capacitance while including a porous body including a substrate having electrical conductivity. As a result, the inventor of the present disclosure has newly found that adjusting the dielectric layers formed on the substrate in different portions of the porous body allows the capacitor to have a structure advantageous in terms of voltage resistance and high capacitance, completing the capacitor of the present disclosure.

### (Embodiments)

Embodiments of the present disclosure will be described below with reference to the drawings. The present disclosure is not limited to Embodiments below.

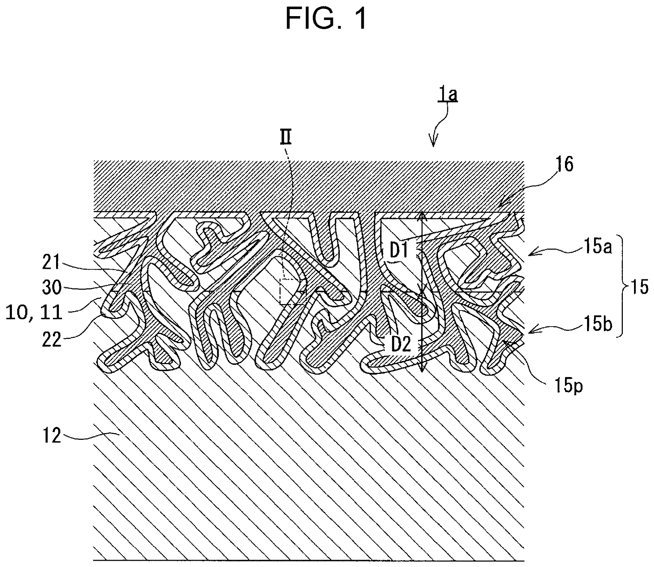

Fig. 1 is a cross-sectional view of an example of a capacitor of the present disclosure. Referring to Fig. 1, a capacitor 1a includes a substrate 10, a first dielectric layer 21, a second dielectric layer 22, and a conductor 30. The substrate 10 has electrical conductivity. Each of the first dielectric layer 21 and the second dielectric layer 22 is disposed on the substrate 10. Each of the first dielectric layer 21 and the second dielectric layer 22 is in contact with the substrate 10. A native oxide film may be formed on the substrate having electrical conductivity. Each of the first dielectric layer 21 and the second dielectric layer 22 is a dielectric layer different from a layer composed only of a native oxide film. The substrate 10, the first dielectric layer 21, and the second dielectric layer 22 constitute a porous body 15. The porous body 15 has inwardly extending pores 15p. The first dielectric layer 21 is disposed in a first portion 15a of the porous body 15. The first portion 15a is a portion including a boundary 16 between the porous body 15 and the outside of the porous body 15. The second dielectric layer 22 is disposed in a second portion 15b of the porous body 15. The second portion 15b is a portion located further inside than the first portion 15a in the porous body 15. Since the first dielectric layer 21 and the second dielectric layer 22 are respectively disposed on the substrate 10 in the first portion 15a and the second portion 15b according to this structure, the capacitor 1a tends to have a desired voltage resistance. Since the first dielectric layer 21 and the second dielectric layer 22 are both disposed on the substrate 10, the dielectric layers are less likely to have a large thickness, and the capacitor 1a is likely to have a high capacitance.

The first dielectric layer 21 is not limited to any particular dielectric layer. The first dielectric layer 21 contains, for example, a vapor-deposited film. In this case, the material of the first dielectric layer 21 is likely to have a high relative permittivity, and the capacitor 1a is more likely to have a high capacitance. In this description, vapor deposition may include physical vapor deposition and chemical vapor deposition as described in Japanese Industrial Standards JIS H0211-1992. The first dielectric layer 21 may contain a native oxide film as a portion in contact with the substrate 10. The vapor-deposited film may be a film formed by a vapor phase method. The vapor phase method is not limited to any particular vapor phase method. Examples of the vapor phase method include atomic layer deposition (ALD), chemical vapor deposition (CVD), and chemical vapor phase methods, such as mist CVD.

The material of the first dielectric layer 21 is not limited to any particular material. The first dielectric layer 21 contains, for example, a metal compound. The metal compound contains, for example, at least one selected from the group consisting of a metal oxide, a metal nitride, and a metal oxynitride. The metal compound further contains at least one selected from the group consisting of hafnium, zirconium, aluminum, tantalum, titanium, silicon, and zinc. In this case, the capacitor 1a is more likely to have a desired voltage resistance, and the capacitor 1a is more likely to have a high capacitance.

Examples of the metal oxide contained in the first dielectric layer 21 include HfO₂, ZrO₂, Hf₁₋ₓZrₓO₂, Al₂O₃, Ta₂O₅, TiO₂, SiO₂, and ZnO. x satisfies the condition 0 < x < 1. Examples of the metal nitride contained in the first dielectric layer 21 include HfN, ZrN, Hf₁₋ₓZrₓN, AlN, and SiN. Examples of the metal oxynitride contained in the first dielectric layer 21 include HfON, ZrON, HfZrON, AlON, and SiON.

The first dielectric layer 21 may further contain at least one selected from the group consisting of yttrium, cerium, and gallium. In this case, the first dielectric layer 21 is likely to have a higher relative permittivity.

The thickness of the first dielectric layer 21 is not limited to any particular value. The thickness of the first dielectric layer 21 is, for example, more than or equal to 5 nm. With this thickness, leakage current is unlikely to occur, and the capacitor 1a is more likely to have a desired voltage resistance. The thickness of the first dielectric layer 21 is, for example, less than or equal to 500 nm. With this thickness, the capacitor 1a is more likely to have a high capacitance. The thickness of the first dielectric layer 21 may be more than or equal to 10 nm, and may be less than or equal to 400 nm, less than or equal to 300 nm, less than or equal to 200 nm, less than or equal to 100 nm, less than or equal to 50 nm, or less than or equal to 20 nm.

The second dielectric layer 22 is not limited to any particular dielectric layer. The second dielectric layer 22 is, for example, a layer containing a dielectric different from that of the first dielectric layer 21. The second dielectric layer 22 contains, for example, an anodic oxide film. In this case, the second dielectric layer 22 is formed on the substrate 10 although the second portion 15b is away from the boundary 16. In addition, the second dielectric layer 22 easily forms uniformly in the second portion 15b so as to have a desired thickness. The capacitor 1a is thus more likely to have a desired voltage resistance. The second dielectric layer 22 may contain an oxide film other than a native oxide film or an anodic oxide film. For example, the second dielectric layer 22 may contain an oxide film formed by heat treatment in an oxidizing atmosphere.

The material of the second dielectric layer 22 is not limited to any particular material. The second dielectric layer 22 contains, for example, an oxide. The oxide contains, for example, at least one selected from the group consisting of hafnium, zirconium, aluminum, tantalum, titanium, silicon, and niobium. In this case, the capacitor 1a is more likely to have a desired voltage resistance, and the capacitor 1a is more likely to have a high capacitance.

Examples of the oxide contained in the second dielectric layer 22 include HfO₂, ZrO₂, Hf₁₋ₓZrₓO₂, Al₂O₃, Ta₂O₅, TiO₂, SiO₂, and Nb₂O₅. x satisfies the condition 0 < x < 1. The second dielectric layer 22 preferably contains at least one selected from the group consisting of Al₂O₃ and Ta₂O₅. In this case, the capacitor 1a is thus more likely to have a desired voltage resistance.

The thickness of the second dielectric layer 22 is not limited to any particular value. The thickness of the second dielectric layer 22 is, for example, more than or equal to 5 nm. With this thickness, leakage current is unlikely to occur, and the capacitor 1a is more likely to have a desired voltage resistance. The thickness of the second dielectric layer 22 is, for example, less than or equal to 500 nm. With this thickness, the capacitor 1a is more likely to have a high capacitance. The thickness of the second dielectric layer 22 may be more than or equal to 10 nm, and may be less than or equal to 400 nm, less than or equal to 300 nm, less than or equal to 200 nm, less than or equal to 100 nm, less than or equal to 50 nm, or less than or equal to 20 nm.

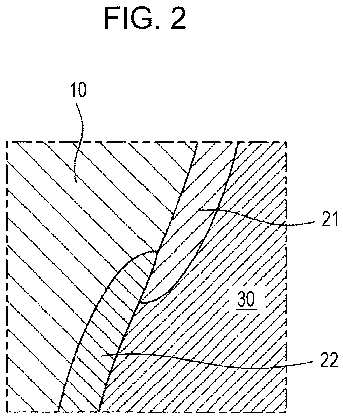

Fig. 2 is a cross-sectional view of the area enclosed by rectangle II in Fig. 1. Referring to Fig. 2, the first dielectric layer 21 and the second dielectric layer 22 are in contact with each other at the boundary between the first portion 15a and the second portion 15b. For example, when the first dielectric layer 21 contains a vapor-deposited film and the second dielectric layer 22 contains an anodic oxide film, an end portion of the first dielectric layer 21 may overlap an end portion of the second dielectric layer 22. Vapor deposition involves depositing solid matter derived from vapor-phase components on the substrate to form a film. Anodic oxidation involves oxidizing part of the anode surface to form an oxide film. Due to such a difference in film formation, as illustrated in Fig. 2, the end portion of the first dielectric layer 21 containing the vapor-deposited film may be disposed on the end portion of the second dielectric layer 22 containing the anodic oxide film.

The relationship between the relative permittivity ε₂₁ of the first dielectric layer 21 and the relative permittivity ε₂₂ of the second dielectric layer 22 is not limited to any particular relationship. For example, the relative permittivity ε₂₁ and the relative permittivity ε₂₂ are different from each other. For example, the relative permittivity ε₂₁ is higher than the relative permittivity ε₂₂. In this case, the capacitor 1a is more likely to have a high capacitance than when the second dielectric layer 22 is disposed on the substrate 10 in the first portion 15a and the second portion 15b of the porous body 15.

Referring to Fig. 1, the substrate 10 includes, for example, a porous portion 11 and a core portion 12. The porous body 15 contains, for example, the porous portion 11. The core portion 12 is a non-porous portion.

The material of the substrate 10 is not limited to any particular material. The substrate 10 contains, for example, a valve metal. Examples of the valve metal include Al, Ta, Ti, Hf, Zr, Si, and Nb. In this case, the second dielectric layer 22 is easily formed by anodic oxidation or other methods.

The valve metal contained in the substrate 10 may be aluminum. In this case, the porous portion 11 can be formed, for example, by electrolytic etching of aluminum foil.

The substrate 10 may be a metal sintered body. In this case, the substrate 10 is likely to have desired porosity, and the capacitor 1a is more likely to have a high capacitance.

The metal contained in the metal sintered body is not limited to any particular metal. The metal sintered body contains, for example, tantalum.

The pore size of the pores in the porous portion 11 is not limited to any particular value. The pore size is, for example, more than or equal to 10 nm. With this pore size, the porous portion 11 is likely to have a large specific surface area, and the capacitor 1a is more likely to have a high capacitance. The pore size is, for example, less than or equal to 1 µm. With this pore size, the first dielectric layer 21 is easily formed, the first portion and the second portion are easily disposed in the desired state, and the capacitor 1a is more likely to have a high capacitance. The pore size of the pores in the porous portion 11 may be more than or equal to 20 nm, more than or equal to 30 nm, more than or equal to 40 nm, or more than or equal to 50 nm, and may be less than or equal to 900 nm, less than or equal to 800 nm, less than or equal to 700 nm, less than or equal to 600 nm, or less than or equal to 500 nm.

The dimension (depth) D1 of the first portion 15a in the direction perpendicular to the boundary 16 and the dimension (depth) D2 of the second portion 15b in the direction perpendicular to the boundary 16 are not limited to any particular relationship. The dimension D1 may be greater than or equal to the dimension D2. In this case, the volume of the first portion 15a relative to the volume of the porous body 15 tends to be large, and if the relative permittivity ε₂₁ is higher than the relative permittivity ε₂₂, the capacitor 1a is more likely to have a high capacitance.

The dimension D1 may be less than the dimension D2. In this case, the volume of the first portion 15a relative to the volume of the porous body 15 tends to be small. Therefore, for example, when the first dielectric layer 21 is formed by vapor deposition and the second dielectric layer 22 is formed by anodic oxidation or by heat treatment in an oxidizing atmosphere, the time required to manufacture the capacitor 1a tends to be short. This is because the time for film formation by anodic oxidation or by heat treatment in an oxidizing atmosphere is shorter than the time for film formation by vapor deposition.

The conductor 30 is not limited to any particular conductor as long as it has electrical conductivity. The conductor 30 contains, for example, at least one selected from the group consisting of a conductive polymer, an electrolyte, and manganese oxide. In this case, the capacitor 1a tends to have high reliability. Examples of the conductive polymer include polyaniline and polypyrrole.

The conductor 30 preferably contains at least one selected from the group consisting of an electrolyte and a conductive polymer. In this case, the conductor 30 easily exhibits a self-healing function, and the capacitor 1a tends to have high reliability.

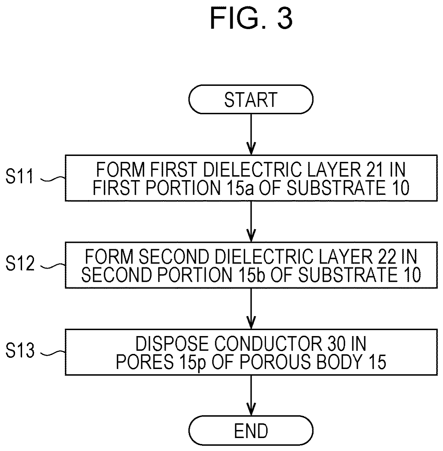

Fig. 3 is a flowchart illustrating an example of the method for manufacturing the capacitor of the present disclosure. The capacitor 1a includes, for example, the substrate 10 having electrical conductivity and porosity, the first dielectric layer 21, and the second dielectric layer 22. The method for manufacturing the capacitor 1a includes disposing the conductor 30 in the pores 15p of the porous body 15 having inwardly extending pores 15p. The conductor 30 is disposed in the pores 15p so as to contact with the first dielectric layer 21 and the second dielectric layer 22. The first dielectric layer 21 is formed on the substrate 10 in the first portion 15a by a vapor phase method. The second dielectric layer 22 is formed on the substrate 10 in the second portion 15b by anodic oxidation or thermal oxidation. The first portion 15a is a portion of the porous body 15 that includes the boundary 16 between the porous body 15 and the outside of the porous body 15. The second portion 15b is a portion located further inside the porous body 15 than the first portion 15a in the porous body 15.

Referring to Fig. 3, in Step S11, a first dielectric layer 21 is formed in the first portion 15a of the substrate 10 by a vapor phase method. The vapor phase method is not limited to any particular vapor phase method. Examples of the vapor phase method include atomic layer deposition (ALD), chemical vapor deposition (CVD), and chemical vapor phase methods, such as mist CVD. In this case, the first dielectric layer 21 easily covers a desired portion of the substrate 10. The vapor phase method is preferably ALD. In this case, the first dielectric layer 21 easily covers a desired portion of the substrate 10, and the first dielectric layer 21 easily forms uniformly. The vapor phase method may be physical vapor deposition, such as vacuum deposition.

Next, in Step S12, the second dielectric layer 22 is formed in the second portion 15b of the substrate 10 by anodic oxidation or thermal oxidation. Accordingly, a capacitor component including the substrate 10, the first dielectric layer 21, and the second dielectric layer 22 is produced.

Next, in Step S13, the conductor 30 is disposed in the pores 15p of the porous body 15 of the capacitor component. For example, when the conductor 30 contains a conductive polymer, electrolytic polymerization may be performed with the precursor of the conductor 30 having been supplied into the pores 15p to obtain the conductive polymer. The capacitor 1a is produced in this manner, for example.

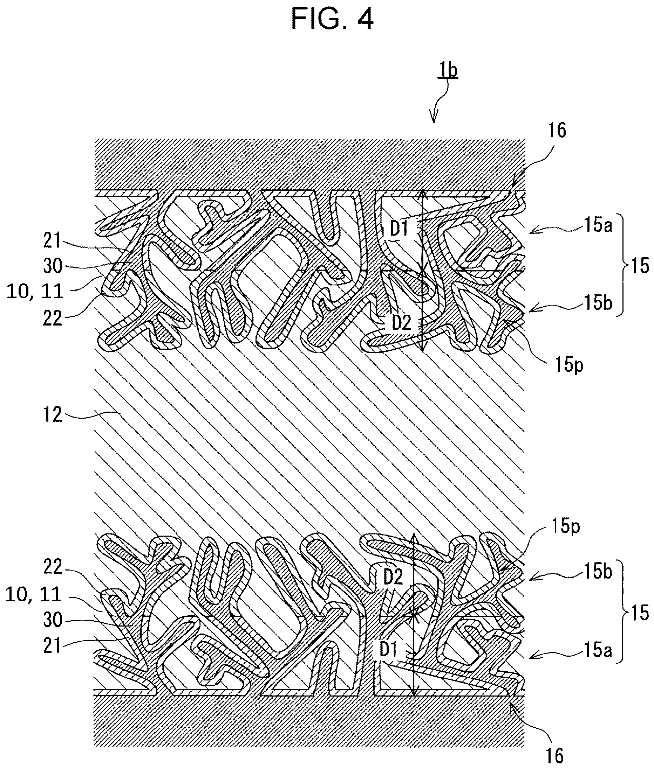

Fig. 4 is a cross-sectional view of another example of the capacitor of the present disclosure. A capacitor 1b illustrated in Fig. 4 has the same structure as the capacitor 1a, except for the portions specifically described. The components of the capacitor 1b that are the same as or correspond to those of the capacitor 1a are denoted by the same reference signs, and detailed description is omitted. The description given for the capacitor 1a also applies to the capacitor 1b, unless technically inconsistent.

Referring to Fig. 4, a substrate 10 includes, for example, two porous portions 11 and a core portion 12. The core portion 12 is disposed between the two porous portions 11. Alternatively, the substrate 10 may have a columnar surface constituting the boundary 16, the porous portion 11 may be formed so as to be located in the columnar surface, and the core portion 12 may be surrounded by the porous portion 11. According to such a structure, the substrate 10 in contact with the dielectric layers is likely to have a large specific surface area, and the capacitor 1a is more likely to have a high capacitance. In the two porous portions 11, the dimension (depth) D1 of the first portion 15a in the direction perpendicular to the boundary 16 may be the same or different. In the two porous portions 11, the dimension (depth) D2 of the second portion 15b in the direction perpendicular to the boundary 16 may be the same or different.

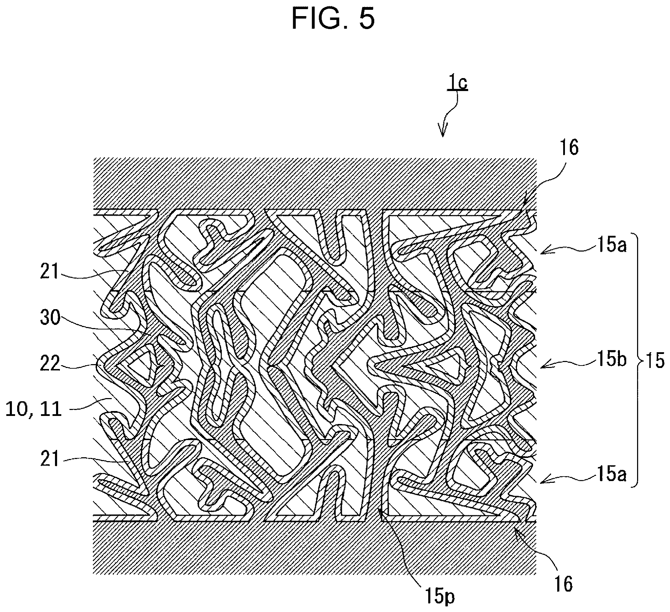

Fig. 5 is a cross-sectional view of yet another example of the capacitor of the present disclosure. A capacitor 1c illustrated in Fig. 5 has the same structure as the capacitor 1a, except for the portions specifically described. The components of the capacitor 1c that are the same as or correspond to those of the capacitor 1a are denoted by the same reference signs, and detailed description is omitted. The description given for the capacitor 1a also applies to the capacitor 1c, unless technically inconsistent.

Referring to Fig. 5, the pores 15p include through-pores in the porous body 15. According to such a structure, the substrate 10 in contact with the dielectric layers is likely to have a large specific surface area, and the capacitor 1a is more likely to have a high capacitance.

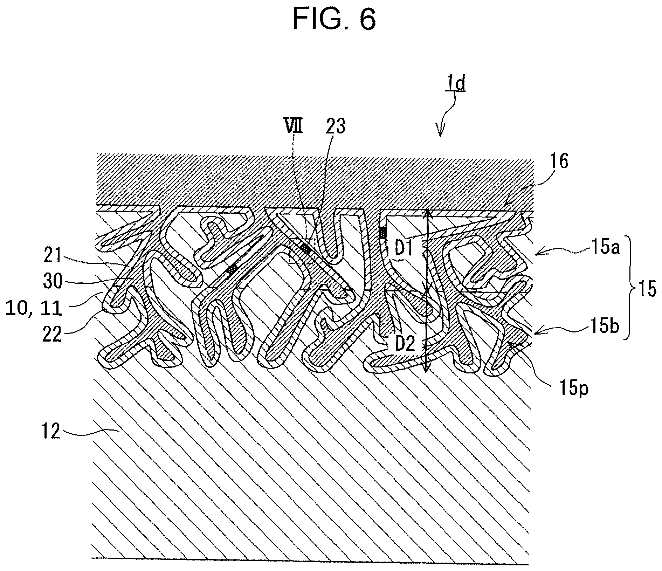

Fig. 6 is a cross-sectional view of yet another example of the capacitor of the present disclosure. A capacitor 1d illustrated in Fig. 6 has the same structure as the capacitor 1a, except for the portions specifically described. The components of the capacitor 1d that are the same as or correspond to those of the capacitor 1a are denoted by the same reference signs, and detailed description is omitted. The description given for the capacitor 1a also applies to the capacitor 1d, unless technically inconsistent.

Referring to Fig. 6, the capacitor 1d further includes a third dielectric layer 23. The third dielectric layer 23 is disposed on the substrate 10. The third dielectric layer 23 is disposed in the first portion 15a of the porous body 15. The third dielectric layer 23 is surrounded by, for example, the first dielectric layer 21. The third dielectric layer 23 contains, for example, an anodic oxide film. The third dielectric layer 23 may contain an oxide film formed by heat treatment in an oxidizing atmosphere. The third dielectric layer 23 is a dielectric layer different from a layer composed only of a native oxide film.

As described above, for example, during the formation of the first dielectric layer 21 by a vapor phase method, part of the first portion 15a of the substrate 10 may be exposed depending on the conditions of the vapor phase method. According to the method for manufacturing the capacitor described above, however, an oxide film, such as an anodic oxide film, may also be formed on a portion of the substrate 10 exposed in the first portion 15a during the formation of the first dielectric layer 21. As a result, the capacitor 1d including the third dielectric layer 23 is produced. The material and thickness of the third dielectric layer 23 are as described for the material and thickness of the first dielectric layer 21.

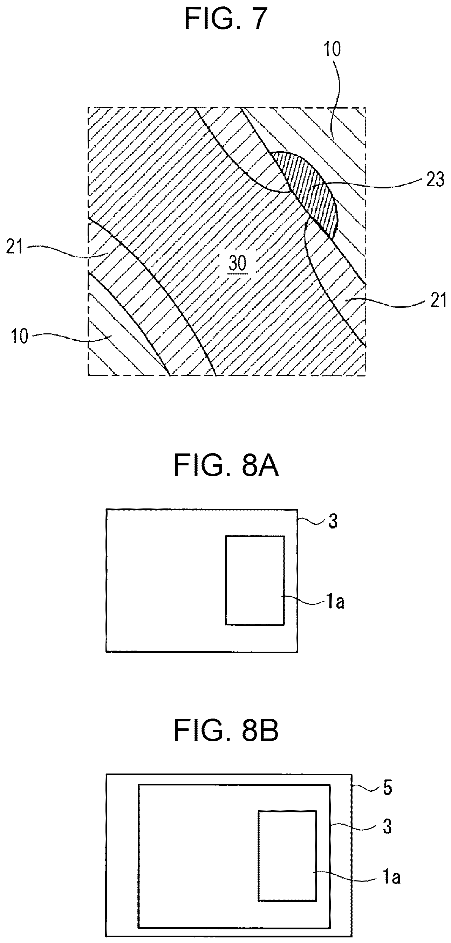

Fig. 7 is a cross-sectional view of the area enclosed by rectangle VII in Fig. 6. Referring to Fig. 7, the outer periphery of the third dielectric layer 23 may overlap the first dielectric layer 21. For example, the first dielectric layer 21 may be disposed on the outer periphery of the third dielectric layer 23.

Fig. 8A is a schematic view of an example of an electric circuit of the present disclosure. An electric circuit 3 includes the capacitor 1a. The electric circuit 3 may be an active circuit or a passive circuit. The electric circuit 3 may be a discharge circuit, a smoothing circuit, a decoupling circuit, or a coupling circuit. Since the electric circuit 3 includes the capacitor 1a, the electric circuit 3 tends to exhibit desired performance. For example, noise is likely to be reduced in the electric circuit 3. The electric circuit 3 may include the capacitor 1b, 1c, or 1d.

Fig. 8B is a schematic view of an example of a circuit board of the present disclosure. Referring to Fig. 8B, a circuit board 5 includes the capacitor 1a. For example, the electric circuit 3 including the capacitor 1a is formed on the circuit board 5. Since the circuit board 5 includes the capacitor 1a, the circuit board 5 tends to exhibit desired performance. The circuit board 5 may be an embedded board or a motherboard. The circuit board 5 may include the capacitor 1b, 1c, or 1d.

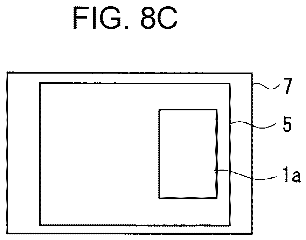

Fig. 8C is a schematic view of an example of a device of the present disclosure. Referring to Fig. 8C, a device 7 includes the capacitor 1a. The device 7 includes, for example, the circuit board 5 including the capacitor 1a. Since the device 7 includes the capacitor 1a, the device 7 tends to exhibit desired performance. The device 7 may be an electronic device, a communication device, a signal processor, or a power supply. The device 7 may be a server, an AC adapter, an accelerator, or a flat panel display, such as a liquid crystal display (LCD). The device 7 may be a USB charger, a solid state drive (SSD), an information terminal, such as a PC, a smartphone, or a tablet PC, or an Ethernet switch. The device 7 may include the capacitor 1b, 1c, or 1d.

### (Appendix)

According to the above description, the following techniques are disclosed.

### (Technique 1)

A capacitor comprising:
a porous body including a plurality of pores; and
a conductor, wherein
the porous body includes:
   a substrate having electrical conductivity;
   a first dielectric layer disposed on the substrate; and
   a second dielectric layer disposed on the substrate,
the conductor is disposed on the first dielectric layer and the second dielectric layer,
the first dielectric layer is disposed in a first portion of the porous body, the first portion including a boundary between the porous body and an outside of the porous body, and
the second dielectric layer is disposed in a second portion of the porous body, the second portion being located further inside the porous body than the first portion.

### (Technique 2)

The capacitor according to Technique 1, wherein the first dielectric layer includes a vapor-deposited film.

### (Technique 3)

The capacitor according to Technique 1 or 2, wherein the second dielectric layer includes an anodic oxide film.

### (Technique 4)

The capacitor according to any one of Techniques 1 to 3, wherein the first dielectric layer has a higher relative permittivity than the second dielectric layer.

### (Technique 5)

The capacitor according to any one of Techniques 1 to 4, wherein the substrate contains a valve metal.

### (Technique 6)

The capacitor according to Technique 5, wherein the valve metal is aluminum.

### (Technique 7)

The capacitor according to any one of Techniques 1 to 6, wherein the substrate is a metal sintered body.

### (Technique 8)

The capacitor according to Technique 7, wherein the metal sintered body contains tantalum.

### (Technique 9)

The capacitor according to any one of Techniques 1 to 8, wherein
the first dielectric layer contains a metal compound,
the metal compound contains at least one selected from the group consisting of a metal oxide, a metal nitride, and a metal oxynitride, and
the metal compound contains at least one selected from the group consisting of hafnium, zirconium, aluminum, tantalum, titanium, silicon, and zinc.

### (Technique 10)

The capacitor according to any one of Techniques 1 to 9, wherein
the second dielectric layer contains an oxide, and
the oxide contains at least one selected from the group consisting of hafnium, zirconium, aluminum, tantalum, titanium, silicon, and niobium.

### (Technique 11)

The capacitor according to any one of Techniques 1 to 10,
wherein the conductor contains at least one selected from the group consisting of a conductive polymer, an electrolyte, and manganese oxide.

### (Technique 12)

An electric circuit comprising the capacitor according to any one of Techniques 1 to 11.

### (Technique 13)

A circuit board comprising the capacitor according to any one of Techniques 1 to 11.

### (Technique 14)

A device comprising the capacitor according to any one of Techniques 1 to 11.

### (Technique 15)

A capacitor component comprising:
a porous body including a plurality of pores, wherein
the porous body includes:
   a substrate having electrical conductivity;
   a first dielectric layer disposed on the substrate; and
   a second dielectric layer disposed on the substrate,
the first dielectric layer is disposed in a first portion of the porous body, the first portion including a boundary between the porous body and an outside of the porous body, and
the second dielectric layer is disposed in a second portion of the porous body, the second portion being located further inside the porous body than the first portion.

### (Technique 16)

A method for manufacturing a capacitor, the method comprising:
preparing the capacitor component according to Technique 15; and
disposing a conductor in the plurality of pores of the porous body to bring the conductor into contact with the first dielectric layer and the second dielectric layer.

### (Technique 17)

The method for manufacturing the capacitor according to Technique 16,
wherein, in the preparing of the capacitor component,
the first dielectric layer is formed by a vapor phase method, and
the second dielectric layer is formed by anodic oxidation or thermal oxidation.

### EXAMPLES

The present disclosure will be described below in more detail by way of Examples. The following Examples are presented for illustration purposes only, and the present disclosure is not limited to the following Examples.

### <Example 1>

An Al foil with a thickness of 120 µm was prepared. The Al foil was subjected to AC etching to render its surface porous, thereby producing a substrate including a core portion and porous portions. The porous portion with a thickness of 40 µm was formed on each surface of the Al foil by etching. The modal pore size in the pore size distribution of the porous portions, as measured with a mercury intrusion porosimeter, was in the range from 100 to 200 nm.

A ZrO₂ layer was formed using an atomic layer deposition (ALD) system FlexAL available from Oxford Instruments. The film formation conditions in the ALD were adjusted as described below. As a result, the ZrO₂ layer was formed on the substrate at and near the surfaces of the porous portions.

Temperature: 250°C
Precursor: tetrakis(ethylmethylamino)zirconium (TEMAZ)
Oxidant: O₂ plasma
Pressure: 250 mTorr
Number of cycles: 140 cycles

The substrate having the ZrO₂ layer formed on and near the surfaces of the porous portions was subjected to anodic oxidation to form an Al₂O₃ layer on the substrate in deep parts of the porous portions. Anodic oxidation was performed by immersing the substrate in a 0.3 mol/L aqueous solution of diammonium adipate and applying a voltage of 7 V for 60 minutes while using the substrate as the anode. A sample according to Example 1 was produced accordingly.

### <Comparative Example 1>

A sample according to Comparative Example 1 was produced in the same manner as in Example 1, except that anodic oxidation was omitted.

### (Observation of Cross-Sectional Structure)

Specimens for cross-sectional observation were prepared from the samples according to Example 1 and Comparative Example 1 by resin embedding. The electron micrographs of the specimens were obtained using a scanning electron microscope (SEM) JSM 7900F available from JEOL Ltd. and a scanning transmission electron microscope (STEM) available from JEOL Ltd. According to the electron micrograph of the specimen prepared from the sample according to Example 1, it is found that the ZrO₂ layer is disposed on the Al substrate in portions near the surfaces of the porous portions of the sample according to Example 1 to well cover the Al substrate. It is also found that, in deep parts of the porous portions of the sample according to Example 1, the Al₂O₃ layer is disposed on the Al substrate to well cover the Al substrate. Table 1 shows the thickness of the ZrO₂ layer near the surfaces of the porous portions and the thickness of the Al₂O₃ layer in deep parts of the porous portions, as observed in the electron micrograph of the specimen prepared from the sample according to Example 1.

According to the electron micrograph of the specimen prepared from the sample according to Comparative Example 1, it is found that the ZrO₂ layer is disposed on the Al substrate in portions near the surfaces of the porous portions of the sample according to Comparative Example 1 to well cover the Al substrate. The thickness of the Al₂O₃ on the Al substrate is less than or equal to 1 nm in deep parts of the porous portions of the sample according to Comparative Example 1. This Al₂O₃ is considered to be derived from the native oxide film. Table 1 shows the thickness of the ZrO₂ layer near the surfaces of the porous portions and the thickness of the Al₂O₃ layer in deep parts of the porous portions, as observed in the electron micrograph of the specimen prepared from the sample according to Comparative Example 1. The native oxide film observed in the deep parts of the porous portions of the sample according to Comparative Example 1 has low insulating properties, rendering it nearly equivalent to bare aluminum. It is thus difficult to form a substantial dielectric layer on the substrate in the deep parts of the porous portions only by a vapor phase method, such as ALD, and it is difficult to say that the sample according to Comparative Example 1 has a structure advantageous in terms of the voltage resistance and high capacitance of the capacitor.

It is understood that the sample according to Example 1 has a structure advantageous in terms of voltage resistance and high capacitance when the capacitor is formed by filling the pores of the porous portions with the conductor.

**[Table 1]**

| | Vicinity of Surfaces of Porous Portions | | Deep Parts of Porous Portions | |
|---|---|---|---|---|
| | metal oxide | thickness [nm] | metal oxide | thickness [nm] |
| Example 1 | ZrO₂ | 14.1 to 15.8 | Al₂O₃ | 13.2 to 13.7 |
| Comparative Example 1 | ZrO₂ | 18.0 to 19.7 | Al₂O₃ | 0.56 |

### Industrial Applicability

The capacitor according to the present disclosure may be used, for example, in applications that require voltage resistance and high capacitance.

### Reference Signs List

1a, 1b, 1c, 1d capacitor
3 electric circuit
5 circuit board
7 device
10 substrate
11 porous portion
12 core portion
15 porous body
15a first portion
15b second portion
15p pore
16 boundary
21 first dielectric layer
22 second dielectric layer
23 third dielectric layer
30 conductor

## Claims

1. A capacitor comprising:
a porous body including a plurality of pores; and
a conductor, wherein
the porous body includes:
a substrate having electrical conductivity;
a first dielectric layer disposed on the substrate; and
a second dielectric layer disposed on the substrate,
the conductor is disposed on the first dielectric layer and the second dielectric layer,
the first dielectric layer is disposed in a first portion of the porous body, the first portion including a boundary between the porous body and an outside of the porous body, and
the second dielectric layer is disposed in a second portion of the porous body, the second portion being located further inside the porous body than the first portion.

2. The capacitor according to claim 1, wherein the first dielectric layer includes a vapor-deposited film.

3. The capacitor according to claim 1, wherein the second dielectric layer includes an anodic oxide film.

4. The capacitor according to claim 1, wherein the first dielectric layer has a higher relative permittivity than the second dielectric layer.

5. The capacitor according to claim 1, wherein the substrate contains a valve metal.

6. The capacitor according to claim 5, wherein the valve metal is aluminum.

7. The capacitor according to claim 1, wherein the substrate is a metal sintered body.

8. The capacitor according to claim 7, wherein the metal sintered body contains tantalum.

9. The capacitor according to claim 1, wherein
the first dielectric layer contains a metal compound,
the metal compound contains at least one selected from the group consisting of a metal oxide, a metal nitride, and a metal oxynitride, and
the metal compound contains at least one selected from the group consisting of hafnium, zirconium, aluminum, tantalum, titanium, silicon, and zinc.

10. The capacitor according to claim 1, wherein
the second dielectric layer contains an oxide, and
the oxide contains at least one selected from the group consisting of hafnium, zirconium, aluminum, tantalum, titanium, silicon, and niobium.

11. The capacitor according to claim 1, wherein the conductor contains at least one selected from the group consisting of a conductive polymer, an electrolyte, and manganese oxide.

12. An electric circuit comprising the capacitor according to any one of claims 1 to 11.

13. A circuit board comprising the capacitor according to any one of claims 1 to 11.

14. A device comprising the capacitor according to any one of claims 1 to 11.

15. A capacitor component comprising:
a porous body including a plurality of pores, wherein
the porous body includes:
a substrate having electrical conductivity;
a first dielectric layer disposed on the substrate; and
a second dielectric layer disposed on the substrate,
the first dielectric layer is disposed in a first portion of the porous body, the first portion including a boundary between the porous body and an outside of the porous body, and
the second dielectric layer is disposed in a second portion of the porous body, the second portion being located further inside the porous body than the first portion.

16. A method for manufacturing a capacitor, the method comprising:
preparing the capacitor component according to claim 15; and
disposing a conductor in the plurality of pores of the porous body to bring the conductor into contact with the first dielectric layer and the second dielectric layer.

17. The method for manufacturing the capacitor according to claim 16,
wherein, in the preparing of the capacitor component,
the first dielectric layer is formed by a vapor phase method, and
the second dielectric layer is formed by anodic oxidation or thermal oxidation.
